# EUROPEAN PATENT APPLICATION

(11) **EP 3 591 191 A1**
(43) Date of publication of application: **08.01.2020**
(21) Application number: 19184027.1
(22) Date of filing: 02.07.2019
(51) Int. Cl.: F02C 3/107, F02C 7/36, F02K 1/06, F02K 3/06

(54) **TURBINE SECTION OF HIGH BYPASS TURBOFAN**

(30) Priority: 02.07.2018 US 201816025022
(71) Applicant: United Technologies Corporation, Farmington, CT 06032 (US)
(72) Inventor: ADAMS, Paul R., Riviera Beach, FL Florida 33404 (US); MAGGE, Shankar S., South Windsor, CT Connecticut 06074 (US); STAUBACH, Joseph B., Colchester, CT Connecticut 06415 (US); LORD, Wesley K., South Glastonbury, CT Connecticut 06415 (US); SCHWARZ, Frederick M., Glastonbury, CT Connecticut 06033 (US); SUCIU, Gabriel L., Glastonbury, CT Connecticut 06033 (US)
(74) Representative: Dehns

(57) **Abstract**

Turbofan engine (20) comprising a fan (42) including an array of fan blades rotatable about an engine axis, a compressor including a first compressor section (30) and a second compressor section (28), the second compressor section including a second compressor section inlet with a compressor inlet annulus area, a fan duct including a fan duct annulus area outboard of the second compressor section inlet, wherein a ratio of the fan duct annulus area to the compressor inlet annulus area defines a bypass area ratio between 8.0 and 20.0, a turbine having a first turbine section (26) driving the first compressor section, and a second turbine section (27) driving the fan through an epicyclic gearbox (46), the second turbine section including blades and vanes, and a second turbine airfoil count defined as the numerical count of all of the blades and vanes in the second turbine section, wherein a ratio of the second turbine airfoil count to the bypass area ratio is between 100 and 150, wherein the second turbine section defines a maximum gas path radius and the fan blades define a maximum radius, and a ratio of the maximum gas path radius to the maximum radius of the fan blades is less than 0.6, and wherein a hub-to-tip ratio (R _{I}:R _{O}) of the second turbine section is greater than 0.5, measured at the maximum R _{O} axial location in the second turbine section.

## Description

### BACKGROUND

The disclosure relates to turbofan engines. More particularly, the disclosure relates to low pressure turbine sections of turbofan engines which power the fans via a speed reduction mechanism.

There has been a trend toward increasing bypass ratio in gas turbine engines. This is discussed further below. There has generally been a correlation between certain characteristics of bypass and the diameter of the low pressure turbine section sections of turbofan engines.

### SUMMARY

A turbofan engine according to an example of the present disclosure includes a fan that has an array of fan blades rotatable about an engine axis, and a compressor that has a first compressor section and a second compressor section. The second compressor section has a second compressor section inlet with a compressor inlet annulus area. A fan duct has a fan duct annulus area outboard of the second compressor section inlet. A ratio of the fan duct annulus area to the compressor inlet annulus area defines a bypass area ratio between 8.0 and 20.0. A turbine has a first turbine section driving the first compressor section, and a second turbine section driving the fan through an epicyclic gearbox. The second turbine section has blades and vanes, and a second turbine airfoil count defined as the numerical count of all of the blades and vanes in the second turbine section. A ratio of the second turbine airfoil count to the bypass area ratio is between 100 and 150. The second turbine section defines a maximum gas path radius and the fan blades define a maximum radius, and a ratio of the maximum gas path radius to the maximum radius of the fan blades is less than 0.6. A hub-to-tip ratio (Ri:Ro) of the second turbine section is greater than 0.5, measured at the maximum Ro axial location in the second turbine section.

In an embodiment, the second (or low pressure) turbine section is configured to drive the second compressor section via the epicyclic gearbox. The rotation of the second turbine section may be tied to that of the fan, such that they rotate at the same speed.

An embodiment of any of the foregoing embodiments, the fan is a single fan, and the array of fan blades have a fixed stagger angle.

A further embodiment of any of the foregoing embodiments includes an engine aft mount location configured to support an engine mount when the engine is mounted and react at least a thrust load of the engine, and an engine forward mount location.

In a further embodiment of any of the foregoing embodiments, the engine forward mount location engages with an intermediate case.

In a further embodiment of any of the foregoing embodiments, the engine aft mount location engages with a mid-turbine frame.

In a further embodiment of any of the foregoing embodiments, the mid-turbine frame supports at least one bearing, and includes a plurality of airfoils distributed in a core flow path.

In a further embodiment of any of the foregoing embodiments, the first turbine section is a two-stage turbine. The second turbine section is a three-stage to six-stage turbine. The second turbine includes an inlet, an outlet, and a pressure ratio of greater than 5. The pressure ratio is pressure measured prior to the inlet as related to pressure at the outlet prior to any exhaust nozzle.

In a further embodiment of any of the foregoing embodiments, the epicyclic gearbox is a planetary gear system.

In a further embodiment of any of the foregoing embodiments, the ratio of the maximum gas path radius to the maximum radius of the fan blades is less than 0.50.

In a further embodiment of any of the foregoing embodiments, the hub-to-tip ratio (Ri:Ro) is less than or equal to 0.7, measured at the maximum Ro axial location in the second turbine section.

In a further embodiment of any of the foregoing embodiments, the second turbine section includes a plurality of blade stages interspersed with a plurality of vane stages, with an aftmost one of the blade stages including shrouded blades.

In a further embodiment of any of the foregoing embodiments, the second turbine section includes a plurality of blade stages interspersed with a plurality of vane stages, with an aftmost one of the blade stages including unshrouded blades.

In a further embodiment of any of the foregoing embodiments, the array of fan blades have a fixed stagger angle.

In a further embodiment of any of the foregoing embodiments, the gearbox is located aft of the first compressor section.

A further embodiment of any of the foregoing embodiments includes a fan nacelle and a core nacelle. The fan nacelle at least partially surrounds the core nacelle. A variable area fan nozzle is in communication with the fan duct, and defines a fan nozzle exit area between the fan nacelle and the core nacelle. The variable area fan nozzle is moveable to change the fan nozzle exit area.

In a further embodiment of any of the foregoing embodiments, the fan nacelle defines an engine inlet, the variable area fan nozzle defines a bypass outlet, and a pressure ratio defined by the engine inlet and the bypass outlet being less than or equal to 1.4.

In a further embodiment of any of the foregoing embodiments, the second turbine section is a three-stage or a four-stage turbine, the hub-to-tip ratio (Ri:Ro) is between 0.55 and 0.65, measured at the maximum Ro axial location in the second turbine section, and the second turbine airfoil count is below 1000 airfoils.

In a further embodiment of any of the foregoing embodiments, the array of fan blades comprise a composite material.

A turbofan engine according to an example of the present disclosure includes a fan that has a circumferential array of fan blades, and a compressor in fluid communication with the fan. The compressor has a first compressor section and a second compressor section. The second compressor section has a second compressor section inlet with a compressor inlet annulus area. A fan duct has a fan duct annulus area outboard of the second compressor section inlet. The ratio of the fan duct annulus area to the compressor inlet annulus area defines a bypass area ratio. A turbine has a first turbine section driving the first compressor section, and a second turbine section driving the fan through an epicyclic gearbox. The second turbine section has blades and vanes, and a second turbine airfoil count is defined as the numerical count of all of the blades and vanes in the second turbine section. A ratio of the second turbine airfoil count to the bypass area ratio is greater than 100 and is less than 170. The second turbine section that has a maximum gas path radius and the fan blades that has a maximum radius, and a ratio of the maximum gas path radius to the maximum radius of the fan blades is equal to or greater than 0.35, and is less than 0.6. A hub-to-tip ratio (Ri:Ro) of the second turbine section is greater than 0.5, and is less than or equal to 0.7, measured at the maximum Ro axial location in the second turbine section.

In a further embodiment of any of the foregoing embodiments, the first turbine section is a two-stage turbine and the second turbine section is a four-stage turbine.

In a further embodiment of any of the foregoing embodiments, the first compressor section is a nine-stage compressor, and the second compressor section is a four-stage compressor.

A further embodiment of any of the foregoing embodiments includes an engine intermediate case, an engine forward mount location proximate to the gearbox and supporting an engine mount when the engine is mounted, and an engine thrust case including an engine aft mount location supporting an engine mount and to react at least a thrust load when the engine is mounted.

In a further embodiment of any of the foregoing embodiments, the ratio of the maximum gas path radius to the maximum radius of the fan blades is less than or equal to 0.55, and the hub-to-tip ratio (Ri:Ro) is between 0.55 and 0.65.

In a further embodiment of any of the foregoing embodiments, the gearbox is located aft of the first compressor section.

A turbofan engine according to an example of the present disclosure includes a fan that has a circumferential array of fan blades, and a compressor in fluid communication with the fan. The compressor has a first compressor section and a second compressor section that have three stages. The second compressor section has a second compressor section inlet with a compressor inlet annulus area, and a fan duct that has a fan duct annulus area outboard of the second compressor section inlet. A ratio of the fan duct annulus area to the compressor inlet annulus area defines a bypass area ratio. A turbine has a two-stage first turbine section driving the first compressor section, and a second turbine section driving the fan through an epicyclic gearbox. The second turbine section has blades and vanes, and a second turbine airfoil count defined as the numerical count of all of the blades and vanes in the second turbine section. A ratio of the second turbine airfoil count to the bypass area ratio is between 100 and 150. The second turbine section has a maximum gas path radius and the fan blades include a maximum radius, and a ratio of the maximum gas path radius to the maximum radius of the fan blades is equal to or greater than 0.35, and is less than 0.6.

In a further embodiment of any of the foregoing embodiments, the bypass area ratio is between 8.0 and 20.0.

In a further embodiment of any of the foregoing embodiments, the second turbine section is a three-stage to six-stage turbine.

In a further embodiment of any of the foregoing embodiments, the array of fan blades have a fixed stagger angle.

In a further embodiment of any of the foregoing embodiments, the ratio of the maximum gas path radius to the maximum radius of the fan blades is between 0.35 and 0.50.

In a further embodiment of any of the foregoing embodiments, the ratio of the second turbine airfoil count to the bypass area ratio is between 120 and 140.

One aspect of the disclosure involves a turbofan engine having an engine case and a gaspath through the engine case. A fan has a circumferential array of fan blades. The engine further has a compressor in fluid communication with the fan, a combustor in fluid communication with the compressor, a turbine in fluid communication with the combustor, wherein the turbine includes a low pressure turbine section having 3 to 6 blade stages. A speed reduction mechanism couples the low pressure turbine section to the fan. A bypass area ratio is greater than about 6.0. A ratio of the total number of airfoils in the low pressure turbine section divided by the bypass area ratio is less than about 170, said low pressure turbine section airfoil count being the total number of blade airfoils and vane airfoils of the low pressure turbine section.

In additional or alternative embodiments of any of the foregoing embodiments, the bypass area ratio may be greater than about 8.0 or may be between about 8.0 and about 20.0.

In additional or alternative embodiments of any of the foregoing embodiments, a fan case may encircle the fan blades radially outboard of the engine case.

In additional or alternative embodiments of any of the foregoing embodiments, the compressor may comprise a low pressure compressor section and a high pressure compressor section.

In additional or alternative embodiments of any of the foregoing embodiments, the blades of the low pressure compressor section and low pressure turbine section may share a low shaft.

In additional or alternative embodiments of any of the foregoing embodiments, the high pressure compressor section and a high pressure turbine section of the turbine may share a high shaft.

In additional or alternative embodiments of any of the foregoing embodiments, there are no additional compressor or turbine sections.

In additional or alternative embodiments of any of the foregoing embodiments, the speed reduction mechanism may comprise an epicyclic transmission coupling the low speed shaft to a fan shaft to drive the fan with a speed reduction.

In additional or alternative embodiments of any of the foregoing embodiments, the low pressure turbine section may have an exemplary 2 to 6 blade stages or 2 to 3 blade stages.

In additional or alternative embodiments of any of the foregoing embodiments, a hub-to-tip ratio (Ri:Ro) of the low pressure turbine section may be between about 0.4 and about 0.5 measured at the maximum Ro axial location in the low pressure turbine section.

In additional or alternative embodiments of any of the foregoing embodiments, a ratio of maximum gaspath radius along the low pressure turbine section to maximum radius of the fan may be less than about 0.55, or less than about 0.50, or between about 0.35 and about 0.50.

In additional or alternative embodiments of any of the foregoing embodiments, the ratio of low pressure turbine section airfoil count to bypass area ratio may be between about 10 and about 150.

In additional or alternative embodiments of any of the foregoing embodiments, the airfoil count of the low pressure turbine section may be below about 1600.

In additional or alternative embodiments of any of the foregoing embodiments, the engine may be in combination with a mounting arrangement (e.g., of an engine pylon) wherein an aft mount reacts at least a thrust load.

The details of one or more embodiments are set forth in the accompanying drawings and the description below. Other features, objects, and advantages will be apparent from the description and drawings, and from the claims.

### BRIEF DESCRIPTION OF THE DRAWINGS

Figure 1A is an axial sectional view of a turbofan engine.
Figure 1B is a cross-sectional view of a portion of a fan case.
Figure 1C is a cross-sectional view of a fan blade taken along line 1C-1C of Figure 1A.
Figure 2A is an axial sectional view of a low pressure turbine section of the engine of Figure 1A.
Figure 2B is a cross-sectional view of a portion of a turbine blade of Figure 2A having a directionally solidified microstructure.
Figure 3 is transverse sectional view of transmission of the engine of Figure 1A.
Figure 4A is a partial cross-sectional view of a fan.
Figure 4B is a cross-sectional view of a fan blade along line 4B-4B of Figure 4A.
Figure 5A is a sectional side view of a variable area fan nozzle in a closed position.
Figure 5B is a sectional side view of the variable area fan nozzle of Figure 5A in an open position.
Figure 6 shows another embodiment.
Figure 7 shows yet another embodiment.

Like reference numbers and designations in the various drawings indicate like elements.

### DETAILED DESCRIPTION

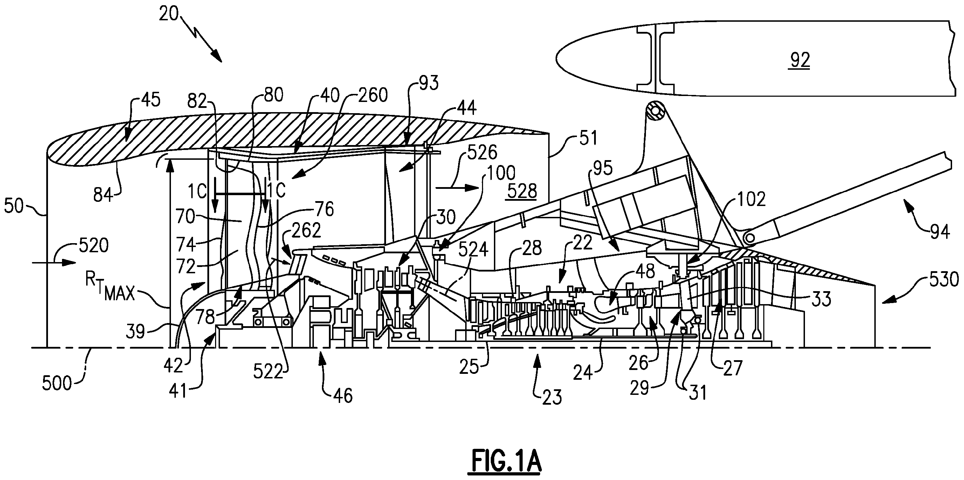

Figure 1A shows a turbofan engine 20 having a main housing (engine case) 22 containing a rotor shaft assembly 23. An exemplary engine is a high-bypass turbofan. Via high 24 and low 25 shaft portions of the shaft assembly 23, a high pressure turbine section (gas generating turbine) 26 and a low pressure turbine section 27 respectively drive a high pressure compressor section 28 and a low pressure compressor section 30. As used herein, the high pressure turbine section experiences higher pressures that the low pressure turbine section. A low pressure turbine section is a section that powers a fan 42. Although a two-spool (plus fan) engine is shown, one of many alternative variations involves a three-spool (plus fan) engine wherein an intermediate spool comprises an intermediate pressure compressor between the low fan and high pressure compressor section and an intermediate pressure turbine between the high pressure turbine section and low pressure turbine section.

The engine extends along a longitudinal axis 500 from a fore end to an aft end. Adjacent the fore end, a shroud (fan case) 40 encircles the fan 42 and is supported by fan exit guide vanes 44. An aerodynamic nacelle around the fan case 40 is shown and an aerodynamic nacelle 45 around the engine case is shown.

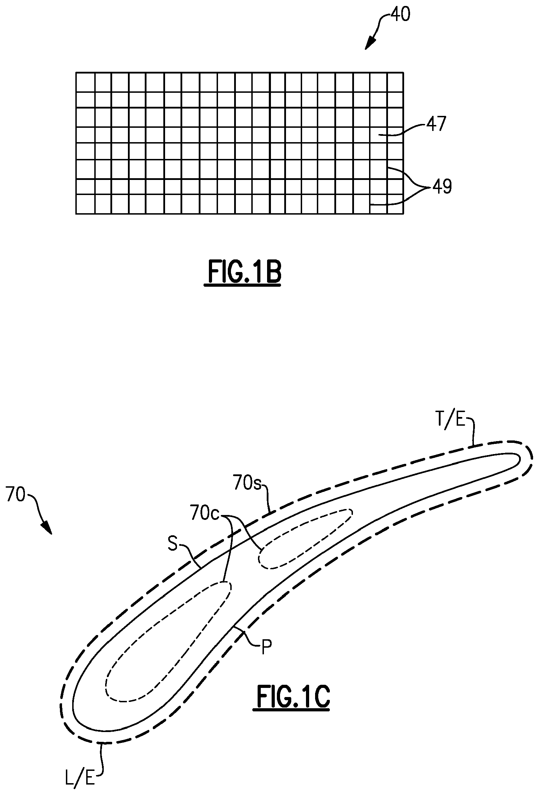

Referring to Figure 1B, with continuing reference to Figure 1A, the fan case 40 can be made of an organic matrix composite, for example. The composite can include a matrix material 47 and reinforcement fibers 49 distributed through the matrix material 47. The reinforcement fibers 49 may be discontinuous or continuous, depending upon the desired properties of the composite, for example. The matrix material 47 may be a thermoset polymer or a thermoplastic polymer. The reinforcement fibers 49 may include organic materials such as carbon, for example, and can be selected based on rigidity goals or other criteria. Given this description, one of ordinary skill in the art will recognize that other types of matrix materials and reinforcement fibers may be used.

The low shaft portion 25 of the rotor shaft assembly 23 drives the fan 42 through a speed reduction mechanism 46. An exemplary speed reduction mechanism is an epicyclic transmission, namely a star or planetary gear system.

The low shaft portion 25 may also drive the low pressure (or 'second') compressor section 30 via the speed reduction mechanism 46, the speed reduction mechanism 46 being positioned aft of the low pressure compressor section 30. In such an embodiment, the rotation of the low pressure compressor section 30 is tied to the rotation of the fan 22, so as to rotate at a common speed. Alternatively, the low shaft portion 25 may drive the low pressure compressor section 30 directly (i.e. not via the speed reduction mechanism 46). Exemplary embodiments are described below which include a low pressure compressor section driven directly by the low shaft portion, but it will be understood that the other features of those embodiments can also be applied to arrangements having a low pressure compressor section driven via a speed reduction mechanism while falling within the scope of the present disclosure.

The nacelle 45 defines an engine inlet 50 and a bypass outlet 51. As is discussed further below, an inlet airflow 520 entering the nacelle 45 through engine inlet 50 is divided into a portion 522 passing along a core flowpath 524 and a bypass portion 526 passing along a bypass flowpath 528. The bypass portion 526 of airflow exits the bypass outlet 51 to produce thrust. With the exception of diversions such as cooling air, etc., flow along the core flowpath sequentially passes through the low pressure compressor section, high pressure compressor section, a combustor 48, the high pressure turbine section, and the low pressure turbine section before exiting from an outlet 530.

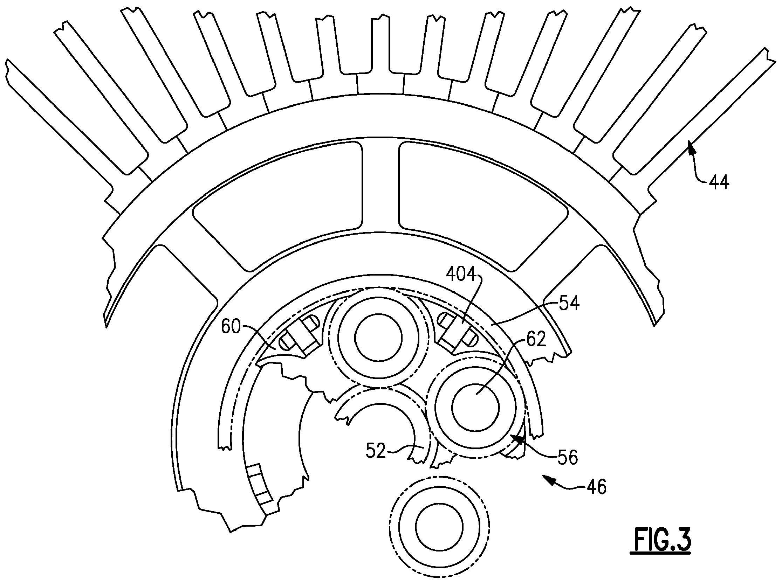

Figure 3 schematically shows details of the transmission 46. A forward end of the low shaft 25 is coupled to a sun gear 52 (or other high speed input to the speed reduction mechanism). The externally-toothed sun gear 52 is encircled by a number of externally-toothed star gears 56 and an internally-toothed ring gear 54. The exemplary ring gear is coupled to the fan to rotate with the fan as a unit.

The star gears 56 are positioned between and enmeshed with the sun gear and ring gear. A cage or star carrier assembly 60 carries the star gears via associated journals 62. The exemplary star carrier is substantially irrotatably mounted relative via fingers 404 to the case 22.

Another transmission/gearbox combination has the star carrier connected to the fan and the ring is fixed to the fixed structure (case) is possible and such is commonly referred to as a planetary gearbox.

The speed reduction ratio is determined by the ratio of diameters within the gearbox. An exemplary reduction is between about 2:1 and about 13:1.

The exemplary fan (Figure 1A) comprises a circumferential array of fan blades 70. Each blade 70 comprises an airfoil 72 having a leading edge 74 and a trailing edge 76 and extending from an inboard end 78 at a platform to an outboard end 80 (i.e., a free tip). The outboard end 80 is in close facing proximity to a rub strip 82 along an interior surface 84 of the nacelle and fan case. In the illustrated embodiment of Figure 1A, the fan blades 70 have a fixed pitch or stagger angle relative to the longitudinal axis 500.

To mount the engine to the aircraft wing 92, a pylon 94 is mounted to the fan case and/or to the other engine cases. The exemplary pylon 94 may be as disclosed in US Patent Application Ser. No. 11/832,107 (US2009/0056343A1). The pylon comprises a forward mount 100 and an aft/rear mount 102. The forward mount may engage the engine intermediate case (IMC) 93 aft of the fan case 40, and the aft mount may engage the engine thrust case 95. The engine thrust case can extend aft of the high pressure compressor section 28 and forward of the low pressure turbine section 27. The aft mount reacts at least a thrust load of the engine.

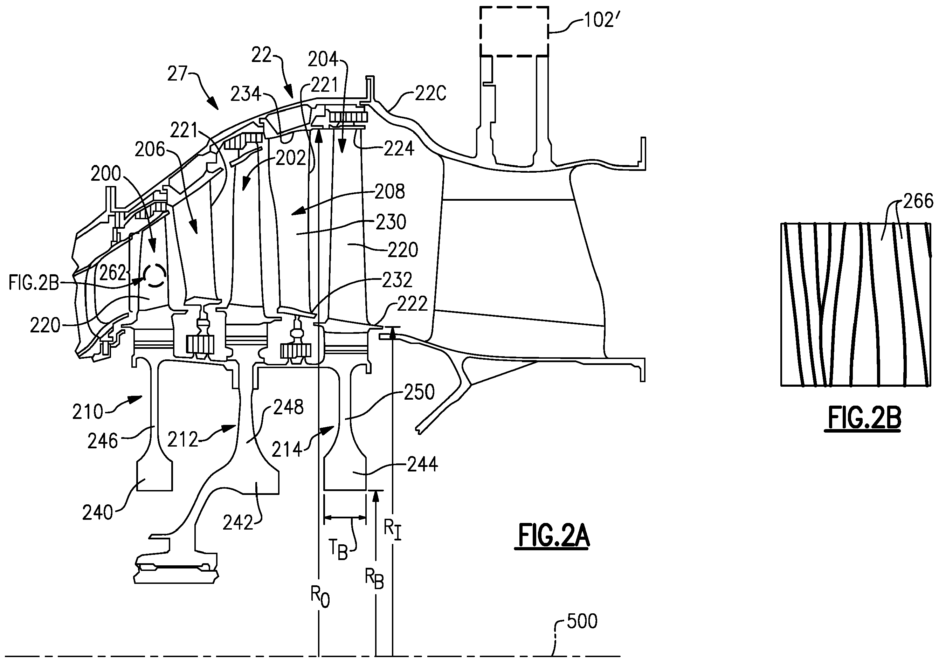

The aft mount 102 is attachable to a mid-turbine frame 29 of the engine static structure. The mid-turbine frame 29 is arranged generally between the high pressure turbine section 26 and the low pressure turbine section 27. Attaching the aft mount 102 to the mid-turbine frame 29 can increase ground clearance by locating portions of the engine 20 relatively closer to the aircraft wing. In another embodiment, the aft mount 102' is attachable to the engine case 22 at turbine exhaust case 22c which is aft of the turbine section 27 (shown in dashed line in Figure 2A). The mid-turbine frame 29 further supports one or more bearings 31, which support high 24 and/or low 25 shaft portions of the shaft assembly 23. The mid-turbine frame 57 includes airfoils 33 (one shown) which are distributed circumferentially about the axis 500 and in the core airflow path 524.

In some embodiments, the fan case 40 is a hardwall containment case configured to contain, and absorb the impact of, a fan blade 70 separating from a fan hub 41 or a fragment thereof. The hardwall containment case can be a hard ballistic liner applied to the nacelle 45. The hard ballistic liner can include a rigid material such as a resin impregnated fiber structure, metallic structures, or ceramic structures, for example.

Further weight reductions and propulsive efficiencies may be realized by incorporating lightweight materials in construction of the fan blades 70. Various lightweight materials can include, but are not limited to, aluminum and composite materials. Various composite materials can include, but are not limited to, two dimensional or three-dimensional composites such as carbon fiber lay-ups or three-dimensional woven carbon fiber as known in the art. The composite may be formed from a plurality of braided yarns such as carbon fibers. Other materials can be utilized, such as fiberglass, Kevlar®, a ceramic such as Nextel™, and a polyethylene such as Spectra®. The composite can be formed from a plurality of uni-tape plies or a fabric. The fabric can include woven or interlaced fibers, for example.

Referring to Figure 1C, the fan blades 70 may include one or more cores 70c. The core 70c can be made from a foam or other lightweight material such as polyurethane. Other materials can be utilized, such as metallic foam and polymethacrylimide (PMI) foam sold under the trade name Rohacell®. The core 70c can be formed from a composite made of one or more plies of fabric or from braided yarns. In alternative embodiments, the fan blades 70 are free of a core. The fan blades 70 can include a sheath 70s located on an exposed surface, such as along a leading edge L/E or trailing edge T/E of the fan blade 70. Sheath 70s can be located at other positions, such along a pressure side P and/or suction side S of the fan blade 70. Various materials of the sheath can be utilized, such as titanium or another material, for example.

To reduce aircraft fuel burn with turbofans, it is desirable to produce a low pressure turbine with the highest efficiency and lowest weight possible. Further, there are considerations of small size (especially radial size) that benefit the aerodynamic shape of the engine cowling and allow room for packaging engine subsystems.

Figure 2A shows the low pressure turbine section 27 as comprising an exemplary three blade stages 200, 202, 204. An exemplary blade stage count is 2-6, more narrowly, 2-4, or 2-3, 3-5, or 3-4. Interspersed between the blade stages are vane stages 206 and 208. Each exemplary blade stage comprises a disk 210, 212, and 214, respectively. A circumferential array of blades extends from peripheries of each of the disks. Each exemplary blade comprises an airfoil 220 extending from an inner diameter (ID) platform 222 to an outer diameter (OD) shroud 224 (shown integral with the airfoil).

An alternative may be an unshrouded blade with a rotational gap between the tip of the blade and a stationary blade outer air seal (BOAS). Each exemplary shroud 224 has outboard sealing ridges which seal with abradable seals (e.g., honeycomb) fixed to the case. The exemplary vanes in stages 206 and 208 include airfoils 230 extending from ID platforms 232 to OD shrouds 234. The exemplary OD shrouds 234 are directly mounted to the case. The exemplary platforms 232 carry seals for sealing with inter-disk knife edges protruding outwardly from inter-disk spacers which may be separate from the adjacent disks or unitarily formed with one of the adjacent disks.

Each exemplary disk 210, 212, 214 comprises an enlarged central annular protuberance or "bore" 240, 242, 244 and a thinner radial web 246, 248, 250 extending radially outboard from the bore. The bore imparts structural strength allowing the disk to withstand centrifugal loading which the disk would otherwise be unable to withstand.

Each turbine blade 220 and/or vane 221 can be made of a directionally solidified material (shown schematically in Figure 2B) or a single-crystal material. Directionally solidified materials include a microstructure having a plurality of elongated grains 266 that are parallel to the major stress axes of the component as is known in the art. Each of the elongated grains 266 can extend radially the along the airfoil. Single crystal materials are formed as a single, homogenous crystal of material that includes no grain boundaries in the material, or rather, consist of only one grain. Single crystal materials can include nickel-based super alloys such as Nickel aluminide (NiAl). In other embodiments, each turbine blade can be made of a composite material, such a ceramic matrix composite (CMC) material, including at least the first rotor stage 200 of the low pressure turbine section 27. Incorporating of one or more of these features, in the low pressure turbine section 27, including the exemplary stage counts, materials and/or seal and disk arrangements, can enable or otherwise assist in redistribution of power extraction from the high pressure turbine section 26 to the low pressure turbine section 27, which can further result in a reduction of the number of stage counts in the high pressure compressor section 28 and a more compact engine arrangement.

A turbofan engine is characterized by its bypass ratio (mass flow ratio of air bypassing the core to air passing through the core) and the geometric bypass area ratio (ratio of fan duct annulus area outside/outboard of the low pressure compressor section inlet (i.e., at location 260 in Figure 1A) to low pressure compressor section inlet annulus area (i.e., at location 262 in Figure 2A). High bypass engines typically have bypass area ratio of at least four. There has been a correlation between increased bypass area ratio and increased low pressure turbine section radius and low pressure turbine section airfoil count. As is discussed below, this correlation may be broken by having an engine with relatively high bypass area ratio and relatively low turbine size. In embodiments, the engine 20 has a bypass area ratio greater than about 6.0, or more narrowly greater than about 8.0. In some embodiments, the engine 20 has a bypass area ratio between about 8.0 and about 20.0.

In some embodiments, the engine 20 bypass ratio is greater than or equal to about six, with an example embodiment being greater than or equal to about ten, the speed reduction mechanism 46 defines a gear reduction ratio of greater than about 2.3 and the low pressure turbine section 27 has a pressure ratio that is greater than about five. In one further non-limiting embodiment, the low pressure turbine section 27 has a pressure ratio that is greater than about five and less than about ten. In one disclosed embodiment, the engine 20 bypass ratio is greater than about ten, the fan diameter is significantly larger than that of the low pressure compressor section 30, and the low pressure turbine section 27 has a pressure ratio that is greater than about five. Low pressure turbine section 27 pressure ratio is pressure measured prior to inlet of low pressure turbine section 27 as related to the pressure at the outlet of the low pressure turbine section 27 prior to an exhaust nozzle. The low pressure turbine section 27 can have a pressure ratio that is less than or equal to about 20.0, such as between about 10.0 and about 15.0. In another embodiment, the engine 20 has a bypass ratio less than or equal to about 25.0, such as between about 15.0 and about 20.0, or between about 15.0 and 18.0. The gear reduction ratio can be less than about 5.0, or less than about 4.0, for example, or between about 4.0 and 5.0. For the purposes of this disclosure, the term "about" is to be determined based on the number of significant digits of the corresponding quantity unless otherwise stated.

The fan 42 is designed for a particular flight condition -- typically cruise at about 0.8 Mach and about 35,000 feet (10,668 m). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.50, or more narrowly less than about 1.45, or between about 1.3 and 1.45, or between about 1.30 and 1.38. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 m/s). Further, low corrected fan tip speed according to one non-limiting embodiment is greater than about 1000 ft / second (304.8 m/s).

By employing a speed reduction mechanism (e.g., a transmission) to allow the low pressure turbine section to turn very fast relative to the fan (and optionally the low pressure compressor section) and by employing low pressure turbine section design features for high speed, it is possible to create a compact turbine module (e.g., while producing the same amount of thrust and increasing bypass area ratio). The exemplary transmission is an epicyclic transmission such as a star or planetary gear system. Alternative transmissions include composite belt transmissions, metal chain belt transmissions, fluidic transmissions, and electric means (e.g., a motor/generator set where the turbine turns a generator providing electricity to an electric motor which drives the fan).

Compactness of the turbine is characterized in several ways. Along the compressor and turbine sections, the core gaspath extends from an inboard boundary (e.g., at blade hubs or outboard surfaces of platforms of associated blades and vanes) to an outboard boundary (e.g., at blade tips and inboard surfaces of blade outer air seals for unshrouded blade tips and at inboard surfaces of OD shrouds of shrouded blade tips and at inboard surfaces of OD shrouds of the vanes). These boundaries may be characterized by radii R_{I} and R_{O}, respectively, which vary along the length of the engine.

For low pressure turbine radial compactness, there may be a relatively high ratio of radial span (R_{O}-R_{I}) to radius (R_{O} or R_{I}). Radial compactness may also be expressed in the hub-to-tip ratio (R_{I}:R_{O}). These may be measured at the maximum R_{O} location in the low pressure turbine section. The exemplary compact low pressure turbine section has a hub-to-tip ratio close to about 0.5 (e.g., about 0.4-0.5 or about 0.42-0.48, with an exemplary about 0.46). In other embodiments, the hub-to-tip ratio is above 0.5, and can be less than or equal to about 0.7, or more narrowly less than about 0.55. For example, the hub-to-tip ratio can be between about 0.55 and about 0.65, such as about 0.6.

Another characteristic of low pressure turbine radial compactness is relative to the fan size. An exemplary fan size measurement is the maximum tip radius R_{Tmax} of the fan blades. An exemplary ratio is the maximum R_{O} along the low pressure turbine section to R_{Tmax} of the fan blades. Exemplary values for this ratio are less than or equal to about 0.6, or more narrowly, less than or equal to about 0.55 (e.g., about 0.35-0.55), less than about 0.50, or about 0.35-0.50.

To achieve compactness the designer may balance multiple physical phenomena to arrive at a system solution as defined by the low pressure turbine hub-to-tip ratio, the fan maximum tip radius to low pressure turbine maximum R_{O} ratio, the bypass area ratio, and the bypass area ratio to low pressure turbine airfoil count ratio. These concerns include, but are not limited to: a) aerodynamics within the low pressure turbine, b) low pressure turbine blade structural design, c) low pressure turbine disk structural design, and d) the shaft connecting the low pressure turbine to the low pressure compressor and speed reduction device between the low pressure compressor and fan or between the low pressure turbine section and low pressure compressor section. These physical phenomena may be balanced in order to achieve desirable performance, weight, and cost characteristics.

The addition of a speed reduction device between the fan and the low pressure turbine and/or the low pressure compressor creates a larger design space because the speed of the low pressure turbine is decoupled from the fan. This design space provides great design variables and new constraints that limit feasibility of a design with respect to physical phenomena. For example the designer can independently change the speed and flow area of the low pressure turbine to achieve optimal aerodynamic parameters defined by flow coefficient (axial flow velocity / wheel speed) and work coefficient (wheel speed / square root of work). However, this introduces structural constraints with respect blade stresses, disk size, material selection, etc.

In some embodiments, the designer can choose to make low pressure turbine section disk bores much thicker relative to prior art turbine bores and the bores may be at a much smaller radius R_{B}. This increases the amount of mass at less than a "self-sustaining radius". Another means is to choose disk materials of greater strength than prior art such as the use of wrought powdered metal disks to allow for extremely high centrifugal blade pulls associated with the compactness.

Another variable in achieving compactness is to increase the structural parameter AN² which is the annulus area of the exit of the low pressure turbine divided by the low pressure turbine rpm squared at its redline or maximum speed. Relative to prior art turbines, which are greatly constrained by fan blade tip mach number, a very wide range of AN² values can be selected and optimized while accommodating such constraints as cost or a countering, unfavorable trend in low pressure turbine section shaft dynamics. In selecting the turbine speed (and thereby selecting the transmission speed ratio, one has to be mindful that at too high a gear ratio the low pressure turbine section shaft (low shaft) will become dynamically unstable.

The higher the design speed, the higher the gear ratio will be and the more massive the disks will become and the stronger the low pressure turbine section disk and blade material will have to be. All of these parameters can be varied simultaneously to change the weight of the turbine, its efficiency, its manufacturing cost, the degree of difficulty in packaging the low pressure turbine section in the core cowling and its durability. This is distinguished from a prior art direct drive configuration, where the high bypass area ratio can only be achieved by a large low pressure turbine section radius. Because that radius is so very large and, although the same variables (airfoil turning, disk size, blade materials, disk shape and materials, etc.) are theoretically available, as a practical matter economics and engine fuel burn considerations severely limit the designer's choice in these parameters.

Another characteristic of low pressure turbine section size is airfoil count (numerical count of all of the blades and vanes in the low pressure turbine). Airfoil metal angles can be selected such that airfoil count is low or extremely low relative to a direct drive turbine. In known prior art engines having bypass area ratio above 6.0 (e.g. 8.0-20), low pressure turbine sections involve ratios of airfoil count to bypass area ratio above 190.

With the full range of selection of parameters discussed above including, disk bore thickness, disk material, hub to tip ratio, and R_{O}/R_{Tmax}, the ratio of airfoil count to bypass area ratio may be below about 170 to as low as 10 (e.g., equal to or below about 150 or an exemplary about 10-170, more narrowly about 10-150). In some embodiments, the ratio of airfoil count to bypass area ratio is greater than or equal to about 100, such as between about 120 to 140, and the low pressure turbine section 27 has between three and four stages. In other embodiments, the ratio of airfoil count to bypass area ratio is less than 100, such as between about 15 and 80, and the low pressure turbine section 27 has between three and four stages. Further, in such embodiments the airfoil count may be below about 1700, or below about 1600 or below about 1000, such as about 300-800 airfoils, or more narrowly between about 350-750 airfoils.

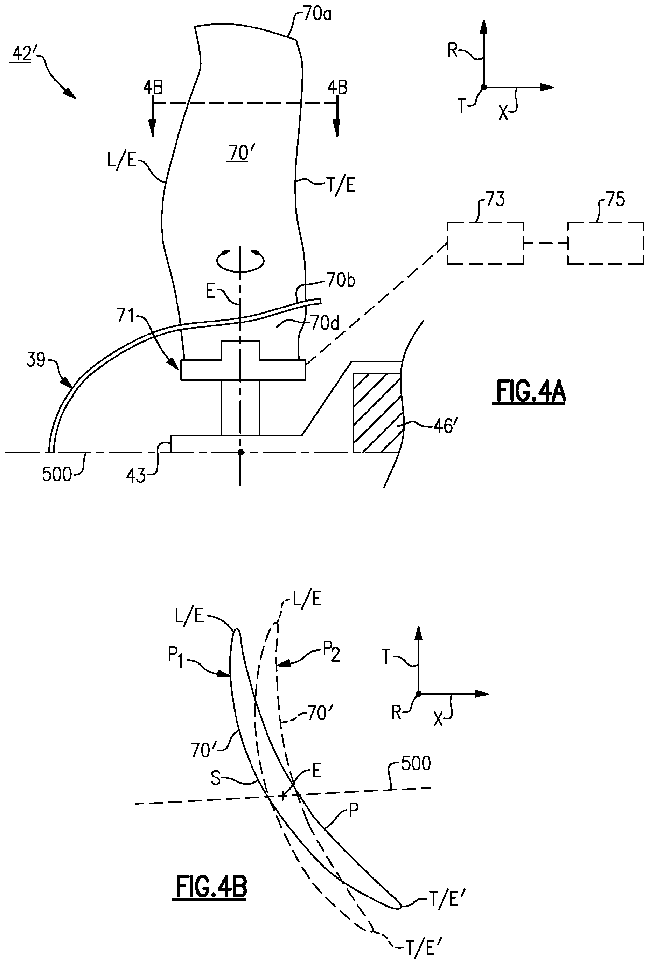

Figure 4A illustrates a partial cross-sectional view of fan 42' including a pitch change mechanism 71 for varying a pitch of one or more fan blades 70'. Each of the fan blades 70' (one shown for illustrative purposes) is rotatably attached to a fan rotor 43 via the pitch change mechanism 71, with fan rotor 43 driven by speed reduction mechanism 46'. The fan blade 70' includes an airfoil body extending between leading edge L/E and trailing edge T/E, in a thickness direction T between pressure and suction sides P, S, and along fan blade axis E in a spanwise or radial direction R between tip 70a and platform 70b adjacent to conical hub 39, with the radial direction R being perpendicular to chordwise direction X and the thickness direction T. A root 70d of the fan blade 70' extends inward from platform 70b. The fan blade axis E can be perpendicular, or otherwise transverse to, the longitudinal axis 500.

The pitch change mechanism 71 is configured to cause one or more of the fan blades 70' to rotate about a corresponding fan blade axis E between a first position PI and a second position P2 (depicted in dashed lines in Figure 4B). The pitch change mechanism 71 includes an actuator 73 coupled to a control device 75 to cause the fan blade 70' to rotate to a desired pitch or angle of incidence. Example actuators and control devices can include a hydraulic pump coupled to a hydraulic source, an electrical motor coupled to a dedicated controller or engine controller, or another suitable device. By changing the pitch of one or more of the fan blades 70, the fan bypass airflow is modulated, and performance of the gas turbine engine 20 can be adjusted during various operating conditions including takeoff, climb, cruise, descent, and/or landing.

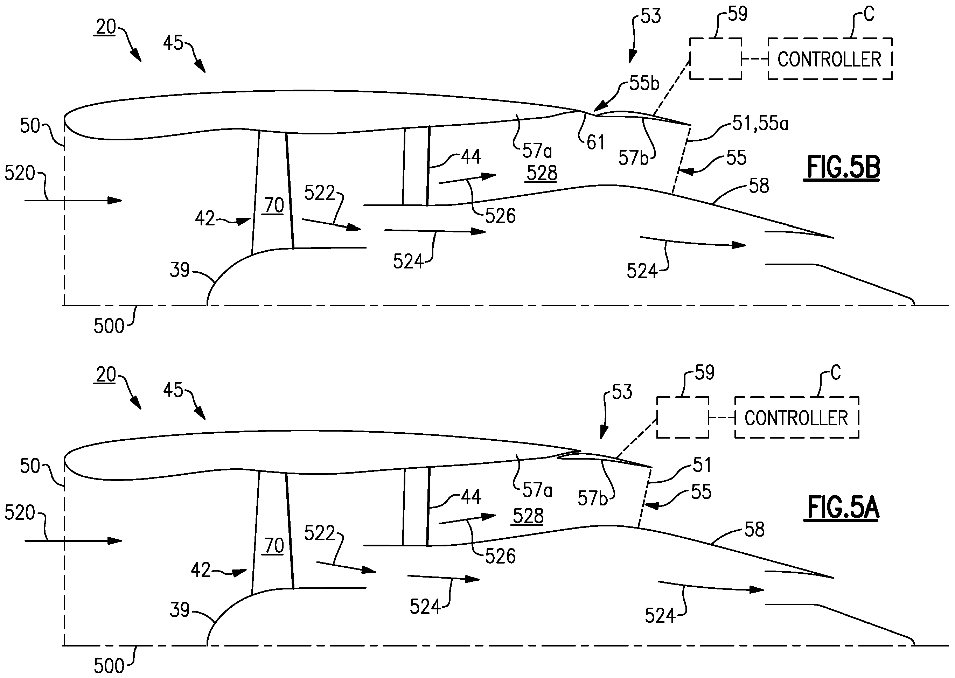

Referring to Figures 5A and 5B, the nacelle 45 can be provided with a variable area fan nozzle (VAFN) 53. The VAFN 53 changes the physical area and geometry of the bypass flow path 528 during particular flight conditions, such as takeoff, landing and cruise. The VAFN 53 is operated to effectively vary a fan nozzle exit area 55 to adjust fan bypass air flow 526 through bypass flowpath 528 during various operating conditions.

The VAFN 53 generally includes a first fan nacelle section 57a and a second fan nacelle section 57b movably mounted relative to the first fan nacelle section 57a to establish an auxiliary port 61 (Figure 5B). The auxiliary port 61 is closed by positioning the second fan nacelle section 57b to abut the first fan nacelle section 57a (Figure 5A). The bypass flow 526 is effectively altered by sliding of the second fan nacelle section 57b along the engine axis 500 relative to the first fan nacelle section 57a between a closed position (Figures 5A) and an open position (Figures 5B).

Movement of the VAFN 53 effectively changes the effective area of the fan nozzle exit area 55, including flow through first and second portions 55a, 55b when the VAFN 53 is deployed (Figure 5B). First portion 55a is defined between the second fan nacelle section 57b and a core cowling 58, and second portion 55b is defined by auxiliary port 61. Walls of the second fan nacelle section 57b and the core cowling 58 can be contoured to vary the fan nozzle exit area 55 in response to relative movement along the engine axis 500.

The second fan nacelle section 57b is moveable in response to an actuator 59. In operation, the VAFN 53 communicates with controller C operatively coupled to actuator 59 to cause the fan nozzle exit area 55 to be adjusted. Controller C can be a standalone system, or can be provided by another system of the engine 20 or aircraft, such as a full authority digital engine controller (FADEC). The controller C can be programmed with logic to translate the VAFN 53 between open and closed positions.

The engine 20 has a pressure ratio defined between the engine inlet 50 and the bypass outlet 51, and can be taken with respect to the relative to the stagnation pressures at a cruise condition, for example. The pressure ratio may be defined with the VAFN 53 in a fully open position or a fully closed position. In embodiments, the pressure ratio is less than or equal to about 1.4, and can be greater than or equal to about 1.1. In one embodiment, the pressure ratio is between about 1.2 and about 1.3.

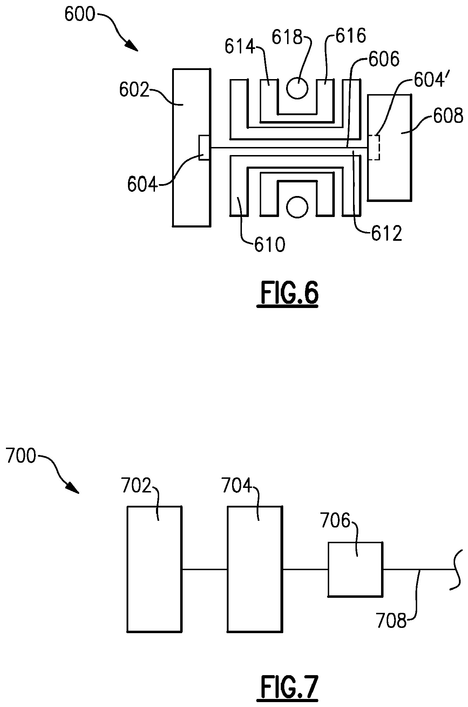

Figure 6 shows an embodiment 600, wherein there is a fan drive turbine 608 driving a shaft 606 to in turn drive a fan rotor 602. A gear reduction 604 may be positioned between the fan drive turbine 608 and the fan rotor 602, or alternatively between an aft portion of the shaft 606 and the fan drive turbine 608 at location 604' aft of a second stage compressor rotor 614 or a combustor section 618 (shown in dashed lines). This gear reduction 604, 604' may be structured and operate like the gear reduction disclosed above. A compressor rotor 610 is driven by an intermediate pressure turbine 612, and the second stage compressor rotor 614 is driven by a turbine rotor 216. The combustion section 618 is positioned intermediate the compressor rotor 614 and the turbine section 616.

Figure 7 shows a previously discussed embodiment 700 wherein a fan rotor 702 and a low pressure compressor section 704 rotate at a common speed. The gear reduction 706 (which may be structured as disclosed above) is intermediate the low pressure compressor rotor section 704 and a shaft 708 which is driven by a low pressure turbine section.

One or more embodiments have been described. Nevertheless, it will be understood that various modifications may be made. For example, when reengineering from a baseline engine configuration, details of the baseline may influence details of any particular implementation. Accordingly, other embodiments are within the scope of the following claims.

## Claims

1. A turbofan engine comprising:
a fan including an array of fan blades rotatable about an engine axis;
a compressor including a first compressor section and a second compressor section, the second compressor section including a second compressor section inlet with a compressor inlet annulus area;
a fan duct including a fan duct annulus area outboard of the second compressor section inlet, wherein a ratio of the fan duct annulus area to the compressor inlet annulus area defines a bypass area ratio between 8.0 and 20.0;
a turbine having a first turbine section driving the first compressor section, and a second turbine section driving the fan through an epicyclic gearbox, the second turbine section including blades and vanes, and a second turbine airfoil count defined as the numerical count of all of the blades and vanes in the second turbine section;
wherein a ratio of the second turbine airfoil count to the bypass area ratio is between 100 and 150;
wherein the second turbine section defines a maximum gas path radius and the fan blades define a maximum radius, and a ratio of the maximum gas path radius to the maximum radius of the fan blades is less than 0.6, and
wherein a hub-to-tip ratio (R*i*:R*o*) of the second turbine section is greater than 0.5, measured at the maximum R*o* axial location in the second turbine section.

2. The turbofan engine as recited in claim 1, wherein the second turbine section is configured to drive the second compressor section via the epicyclic gearbox.

3. The turbofan engine as recited in claim 1 or 2, wherein the fan is a single fan, and the array of fan blades have a fixed stagger angle.

4. The turbofan engine as recited in any preceding claim, further comprising:
an engine aft mount location configured to support an engine mount when the engine is mounted and react at least a thrust load of the engine; and
an engine forward mount location.

5. The turbofan engine as recited in claim 4, wherein the engine forward mount location engages with an intermediate case.

6. The turbofan engine as recited in claim 4 or 5, wherein the engine aft mount location engages with a mid-turbine frame, optionally wherein the mid-turbine frame supports at least one bearing, and includes a plurality of airfoils distributed in a core flow path.

7. The turbofan engine as recited in claim 1, wherein the first turbine section is a two-stage turbine, the second turbine section is a three-stage to six-stage turbine, the second turbine includes an inlet, an outlet, and a pressure ratio of greater than 5, the pressure ratio being pressure measured prior to the inlet as related to pressure at the outlet prior to any exhaust nozzle, optionally wherein the epicyclic gearbox is a planetary gear system.

8. The turbofan engine as recited in any preceding claim, wherein the ratio of the maximum gas path radius to the maximum radius of the fan blades is less than 0.50.

9. The turbofan engine as recited in any preceding claim wherein the hub-to-tip ratio (R*i*:R*o*) is less than or equal to 0.7, measured at the maximum R*o* axial location in the second turbine section.

10. The turbofan engine as recited in any preceding claim, wherein the second turbine section includes a plurality of blade stages interspersed with a plurality of vane stages, with an aftmost one of the blade stages including shrouded blades.

11. The turbofan engine as recited in any of claims 1 to 9, wherein the second turbine section includes a plurality of blade stages interspersed with a plurality of vane stages, with an aftmost one of the blade stages including unshrouded blades.

12. The turbofan engine as recited in any preceding claim, comprising:
a fan nacelle and a core nacelle, the fan nacelle at least partially surrounding the core nacelle; and
a variable area fan nozzle in communication with the fan duct, and defining a fan nozzle exit area between the fan nacelle and the core nacelle, the variable area fan nozzle moveable to change the fan nozzle exit area.

13. The turbofan engine as recited in claim 12, wherein the fan nacelle defines an engine inlet, the variable area fan nozzle defines a bypass outlet, and a pressure ratio defined by the engine inlet and the bypass outlet being less than or equal to 1.4.

14. The turbofan engine as recited in any preceding claim, wherein the second turbine section is a three-stage or a four-stage turbine, the hub-to-tip ratio (R*i*:R*o*) is between 0.55 and 0.65, measured at the maximum R*o* axial location in the second turbine section, and the second turbine airfoil count is below 1000 airfoils.

15. The turbofan engine as recited in any preceding claim, wherein the array of fan blades comprise a composite material.
